# EUROPÄISCHE PATENTSCHRIFT

(11) **EP 1 423 314 B1**
(45) Veröffentlichungstag und Bekanntmachung des Hinweises auf die Patenterteilung: **02.01.2008**
(21) Anmeldenummer: 02796267.9
(22) Anmeldetag: 23.08.2002
(51) Int. Cl.: B65G 1/04

(54) **REGALLAGER MIT SCHIEBERN IN DEN REGALFÄCHERN**
SHELVING STORAGE FACILITY COMPRISING SLIDES IN THE SHELVES
MAGASIN A RAYONNAGE COMPORTANT DES TIROIRS MONTES DANS LES COMPARTIMENTS DE RAYONNAGE

(30) Priorität: 27.08.2001 DE 10140958
(43) Veröffentlichungstag der Anmeldung: 02.06.2004
(60) Teilanmeldung: 07009500.5
(73) Patentinhaber: LAMOST Patentverwertungs GmbH & Co. KG, 73230 Kirchheim (DE)
(72) Erfinder: Lang, Hartmut, 73249 Wernau (DE)
(74) Vertreter: Rüger, Barthelt & Abel Patentanwälte
(86) Internationale Anmeldenummer: PCT/EP2002/009448
(87) Internationale Veröffentlichungsnummer: WO 2003/018443

(56) Entgegenhaltungen:
- DE-A- 1 449 152
- US-A- 4 129 229

## Beschreibung

Aus der DE 199 46 800 ist ein Regallager bekannt, das V-förmige Regalfächer aufweist. In jedem Regalfach liegt ein rinnenförmiger Produktträger, der an die V-Form des Regalfaches angepasst ist. Der Produktträger kann mehrere einzelne Gegenstände oder Verpackungen mit Gegenständen aufnehmen. Auf diese Weise soll die räumliche Tiefe des Regallagers besser ausgenutzt werden.

Mit Hilfe eines Regalbediengerätes können die einzelnen Produktträger aus den Regalfächern entnommen und wieder zurückgebracht werden.

Um ein bestimmtes Produkt aus der Reihe von Produkten, die in Reihe hintereinander auf einem Produktträger liegen, herauszunehmen, fährt das Regalbediengerät das betreffende Regalfach an und übernimmt den dort vorhandenen Produktträger vollständig auf das Regalbediengerät. Sodann wird der Produktträger mit Antriebseinrichtung erneut in das Regalfach zurückgeschoben, wobei durch eine. Anschlageinrichtung die Reihe von Produkten, die sich auf dem Produktträger befinden, angehalten wird. Der Produktträger wird solange unter den Produkten in Richtung Regalfach weggeschoben, bis auch das gewünschte Produkt unmittelbar auf dem Regalbediengerät liegt. Daraufhin fährt das Regalbediengerät zur Kommissionierstation oder zu einer Ausgabestation. Dort angekommen wird die Reihe von Produkten vorgeschoben, bis das gewünschte Produkt von dem Regalbediengerät in die Ausgabestation herunterfällt. Anschließend fährt das Regalbediengerät mit den noch verbliebenen Produkten zu dem ursprünglichen Fach zurück und übergibt die nichtausgegebenen Produkte zurück auf den in dem Regalfach liegenden Produktträger.

Das bekannte Regallager nutzt die Tiefe des Regals sehr gut aus und ermöglicht die chaotische Speicherung von Produkten unterschiedlicher Größe in ein und demselben Regalfach. Ungünstig bei dem bekannten Regallager ist allerdings der Umstand, dass das Regalbediengerät nach der Ausgabe des Produktes erneut zu dem ursprünglichen Regalfach zurückfahren muss, um die auf dem Regalbediengerät während der Ausgabe zwischengespeicherten Produkte erneut ordnungsgemäß einzulagern. Die Rückspeicherung entfällt nur dann, wenn das gewünschte Produkt sich auf einer Position auf dem Produktträger befindet, die dem Regalbediengerät unmittelbar benachbart ist.

Erfahrungsgemäß sind bei 70 - 80 % der Produktentnahmen solche Doppelfahrten erforderlich. Die Doppelfahrten erhöhen die Besetztzeit bzw. vermindern die Zugriffszeit des Systems. Die Zeit zum Ausführen eines Entnahmeauftrags erhöht sich nennenswert, insbesondere dann, wenn die Regalfächer von der Ausgabestation weit entfernt liegen.

Darüber hinaus ist bei dem bekannten Regallager wegen der V-förmigen Regalfächer keine leichte Anpassung an das statistische Verteilungsspektrum der Produktgrößen und deren Raumbedarf in dem Regallager möglich.

Ein ähnliches Regallager ebenfalls zur chaotischen Speicherung jedoch ohne die Verwendung von Produktträgern ist aus der DE 100 00 684 A1 bekannt. Der Regalboden hat in der Draufsicht auf die Stirnseite eine zickzack-förmige Gestalt. Er bildet eine Vielzahl von V-förmigen Rinnen, von denen sich jede über die Tiefe des Regalbodens erstreckt und die unmittelbar nebeneinander liegen.

Um die Produkte aus dem jeweiligen Regalfach heraus zu befördern, ist für jedes Fach ein dreieck-förmiger Schieber vorgesehen. Der Schieber wird mit Hilfe von zwei Gewindespindeln längs dem V-förmigen Regalfach bewegt. Die Gewindespindeln sind in dem Regalboden gelagert. Ihr Antrieb erfolgt über eine Antriebseinrichtung, die in dem Regalbediengerät vorhanden ist.

Zur Entnahme von Gegenständen wird das Regalbediengerät vor das betreffende Regalfach gebracht und es werden die beiden Gewindespindeln, die zur Bewegung des Schiebers vorgesehen sind mit der Antriebseinrichtung des Regalbediengerätes gekoppelt.

Hinsichtlich der Flexibilität des bekannten Regallagers gilt dasselbe, was bereits oben in Verbindung mit der DE 199 46 800 A1 ausgeführt ist.

Die Lagerung der Gewindespindeln im Regalboden ist sehr aufwändig und verschmutzungsanfällig. Außerdem erfordert es einen erhöhten regelungs- und steuerungstechnischen Aufwand, die Lage des Schiebers in dem jeweiligen Regalfach zu kennen. Die Lage des Schiebers ist von der Drehstellung der Gewindespindeln abhängig, die exakt synchronisiert betätigt werden müssen um ein Verkanten der Schiebers zu verhindern.

In der US 4,129,229 ist ein Speicherregal erläutert, das mehrere übereinander angeordnete ebene Regalböden aufweist. Die Fläche jedes Regalbodens ist durch daran befestigte Schienen in einzelne Regalfächer aufgeteilt.

Um die Gegenstände aus den Regalfächern heraus zu transportieren, ist jedem Regalfach ein Schieber zugeordnet. Zur Betätigung des Schiebers befinden sich in jeder Schiene, die die Regalfächer voneinander trennen, zwei Riemenscheiben, die achsparallel gelagert sind. Um diese Riemenscheiben läuft ein Endlosriemen um, der mit dem Schieber verbunden ist. Die Riemen sind mit den Riemenscheiben lediglich reibschlüssig verbunden. Eine der Riemenscheiben befindet sich in der Nähe der Rückseite des Regalbodens, während die andere der Vorderkante benachbart ist, über die der Gegenstand ausgegeben wird. Zum Antrieb der Riemenschieben ist die an der Vorderkante angeordnete zusätzlich mit einer Verzahnung versehen, die mit einem Zahnrad auf dem Regalbediengerät gekuppelt werden kann, das vor den Fachböden entlang läuft.

Zumindest wegen der reibschlüssigen Kupplung zwischen der aus dem Regalbediengerät angetriebenen verzahnten Riemenscheibe und dem Schieber ist die Position des Schiebers für das Regalbediengerät nicht eindeutig erkennbar.

Der vertikale Platzbedarf für die Führungsschienen ergibt sich aus dem erforderlichen Mindestdurchmesser der Riemenscheiben, um die der Endlosriemen umläuft. Die Höhe ist nicht unbeträchtlich.

Der technische Aufwand zum Antrieb der Schieber ist erheblich.

Aus der DE 14 49 152 A1 ist ein Warenförderwerk für Universalverkaufsautomaten bekannt. Der Universalverkaufsautomat weist ein Regalfach mit einem ebenen Fachboden auf, das dazu eingerichtet ist, einen oder mehrere voneinander getrennte Gegenstände unmittelbar aufzunehmen, die längs eines linearen Beschickungswegs in das Regalfach hinein oder aus dem Regalfach heraus zu befördern sind und die in dem Regalfach längs des Beschickungswegs hintereinander liegen.

Es ist ferner ein dem Regalfach zugeordneten Schieber vorhanden, der dazu eingerichtet ist, den Gegenstand oder die Gegenstände aus dem Regalfach heraus zu befördern.

Auf dem Fachboden befindet sich wenigstens eine Führungsschien, die bezüglich des Regalfachs ortsfest ist und mit der der Schieber gekuppelt ist, um den Schieber (41) parallel zu dem Beschickungsweg zu führen.

Mit dem Schieber ist eine Kuppelstange lediglich zugfest verbunden und sie ist translatorisch geführt.

Ein Regalbediengerät ist dazu eingerichtet vor jedes der Regalfächer bewegt zu werden und mit dem die Gegenstände aus dem Regalfach heraus befördert werden.

Ferner sind Antriebsmitteln für den Schieber auf dem Regalbediengerät angeordnet und dazu eingerichtet, mittels der Kuppelstange mit dem Schieber wahlweise lösbar gekuppelt zu werden, um den Schieber lediglich im Sinne eines Herausbeförderns von Gegenständen aus dem Regalfach in Bewegung zu setzen.

Die Verbindung zwischen der Kuppelstange und dem Schieber geschieht über ein Freilaufgetriebe, damit beim Zurückbewegen der Kuppelstange der Schieber an der Stelle entsprechend der letzten Warenausgabe stehen bleibt. Das Zurückbewegen des Schiebers erfolgt über eine zweite Antriebsstange.

Ausgehend hiervon ist es Aufgabe der Erfindung ein Regallager zu schaffen, das für eine chaotische Speicherung der einzulagernden Produkte unmittelbar auf den Regalböden geeignet ist und das eine einfache Betätigung der Schieber zur Entnahme der Produkte aufweist.

Diese Aufgabe wird erfindungsgemäß durch das Regallager mit den Merkmalen des Anspruches 1 gelöst.

Bei dem neuen Regallager ist in dem Regalfach, ein Schieber vorhanden, der es ermöglicht, die in dem Regalfach befindlichen Gegenstände in Gestalt von Verpackungen oder unverpackten Produkten längs des Beschickungsweges aus dem Regalfach herauszubefördern. Zu jedem Regalfach gehört ein eigener Schieber, der auch ständig im Regalfach verbleibt. Der Schieber wird mit Hilfe von Führungsmitteln in dem betreffenden Regalfach parallel zum Beschickungsweg geführt. Die Führungsmittel sind bezüglich des Regalfaches ortsfest.

Auf diese Weise kann ohne die Verwendung des aus dem Stand der Technik bekannten Produktträgers die Reihe von Produkten auch wieder aus dem Regalfach herausbefördert werden.

Die Bewegung der Schieber geschieht mit einer Antriebseinrichtung, die auf dem Regalbediengerät angeordnet ist. Auf diese Weise wird auch die Anzahl von Antriebseinrichtungen minimiert. Sämtliche Schieber können passiv ausgeführt werden. Es ergibt sich ein erhebliches Kosteneinsparpotential.

Das Regalbediengerät, das ohnehin zur Überführung des jeweiligen Gegenstands von dem Regalfach zu der Ausgabestation benötigt wird, bringt sozusagen automatisch den Antrieb für den Schieber mit.

Bei dem neuen Regalbediengerät können die Fachböden eben sein, was die Anpassung an unterschiedliche Produktgrößen wesentlich vereinfacht. Es genügen einfache ebene Platten als Regalböden, die abschnittsweise die jeweiligen Fachböden bilden.

Die Fachböden oder Regalfächer sind voneinander durch die Führungsmittel getrennt, wenn diese auf dem jeweiligen Regalboden befestigt sind.

Für die Einlagerung von zylindrischen Gegenständen, wie beispielsweise Flaschen und dergleichen, können Fachböden verwendet werden, die Mulden aufweisen, deren Krümmungsachse parallel zur Krümmungsrichtung liegt.

Damit sich keine Gegenstände unter dem Schieber einklemmen können und auch extrem flache Gegenstände ohne weiteres aus dem Regalfach herausbewegt werden können, ist es zweckmäßig, wenn der Schieber wenigstens einen Fortsatz aufweist, der sich unmittelbarer Nähe des zugehörigen Fachbodens befindet. Mit diesem Fortsatz kann der Schieber auch ohne weiteres auf dem Fachboden gleiten.

Sollten Gegenstände eingelagert werden, die dazu neigen bei einer schnellen Beschleunigung über den einen Fortsatz zu kippen, besteht auch die Möglichkeit, mehr als einen Fortsatz zu verwenden, die gemeinsam eine Anschlagebene definieren, die vorzugsweise senkrecht zu der von dem Fachboden definierten Ebene verläuft.

Es ist außerdem vorteilhaft, wenn die Betätigungsfortsätze eine Länge aufweisen, die größer als die halbe Breite des Regalfaches ist. Der betreffende Gegenstand wird hierdurch in einer ausreichenden Breite angeschoben und neigt nicht dazu, sich in dem Regalfach, in dem er im übrigen praktisch keine Führung hat, zu verkanten.

Eine leichte Anpassbarkeit an das Verteilungsspektrum der Produkte hinsichtlich von deren Größe, wird auch erreicht, wenn je Regalfach lediglich eine Führungseinrichtung vorhanden ist.

Die Führungseinrichtung ist neben einer Seite des Schiebers angeordnet und dazu eingerichtet, den Schieber verkantungsfrei zu führen. Die Führungseinrichtung besteht vorteilhafterweise in einer Führungsschiene. Diese kann als Hohlprofil ausgeführt sein, wobei der Hohlraum eine längs der Führungsschiene sich erstreckende Führungsnut bildet.

Wenn das Profil der Führungsnut sich aus einem Kreisabschnitt und einem Rechteckabschnitt zusammensetzt, bei dem der Rechteckabschnitt dem Nutenschlitz entspricht, kann eine Mitnehmereinrichtung für den Schlitten völlig klemmfrei geführt werden, und zwar auch dann wenn ungünstige Toleranzen einschließlich der Positionierung des Bediengerätes auftreten. Die Mitnehmereinrichtung besteht beispielsweise in einem kugelförmigen Grundkörper, der in dem zylindrischen Abschnitt des Nutenprofils geführt und einem Zapfen, der aus dem Nutenschlitz herausragt. Der Mitnehmerzapfen wird mit dem Schieber gekoppelt, der im übrigen auf der Außenseite der Führungsschiene klemmfrei geführt ist.

Die Mitnehmereinrichtung kann innerhalb der Führungsnut bis zu einem relativ großen Maß geschwenkt und verkippt werden, ohne dass Verklemmungen zustande kommen.

Um die Mitnehmereinrichtung und damit den Schieber mit der Antriebseinrichtung auf dem Bediengerät zu koppeln, sind Koppelmittel vorhanden. Zu diesen gehört eine Kuppelstange, die zug- und druckfest mit dem Mitnehmerschlitten verbunden ist. Im Falle eines kugelförmigen Mitnehmerschlittens kann die Verbindung sogar starr sein, während für andere Formen des Mitnehmerschlittens eine Gelenkverbindung zweckmäßig ist, um eine Verklemmung des Mitnehmerschlittens an der Führungsschiene zu vermeiden.

Zu den Kuppelmitteln kann ferner ein Kuppelschlitten gehören, der über ein Gelenk mit der Kuppelstange verbunden ist. Der Kuppelschlitten ist so gestaltet, dass er einen Abschnitt aufweist, der in dem Nutenschlitz geführt ist. Durch diese Maßnahme kann der Kuppelschlitten ohne weiteres einen Versatz zwischen der Führungsschiene in dem Regalfach und einer Führungsschiene auf dem Regalbediengerät ausgleichen, ohne sich zu verklemmen.

Das Regalbediengerät ist in Führungseinrichtungen geführt, damit es jedes Regalfach anfahren kann. Auf dem Regalbediengerät ist wenigstens eine Fördereinrichtung vorhanden, um Produkte auf dem Regalbediengerät zumindest parallel zu dem Beschickungsweg zu bewegen.

Die Fördereinrichtung kann beispielsweise von einem Endlosförderband gebildet sein. Wenn das Regalbediengerät eine wahlweise zu verschließende Öffnung enthält, kann die beim Stand der Technik auftretende Anzahl von Leerfahrten, die für das Zurückbringen von nichtbenötigten Gegenständen erforderlich sind, vermieden werden. Es genügt, wenn die Öffnung freigegeben wird, sobald das zu entnehmende Produkt sich über der Öffnung befindet. Das Produkt kann in einen Sammelbereich fallen, wobei nach dem erneuten Verschließen der Öffnung, die überzähligen, auf dem Regalbediengerät befindlichen Produkte, über die verschlossene Öffnung zurück in das Regal transportiert werden können.

Die Verschlussmittel für die verschließbare Öffnung können von dem Förderband gebildet sein, das an dem Regalbediengerät linear beweglich gelagert ist.

Die Antriebseinrichtung für den Schlitten kann einen Finger umfassen, der mit dem Schieber unmittelbar oder mittelbar beispielsweise über die Kuppelmittel zu kuppeln ist.

Eine sehr einfache Einrichtung zur Verbindung des Fingers mit dem Schieber beziehungsweise mit den Kuppelmitteln besteht in einer Öse, die durch eine entsprechend Vertikalbewegung des Regalbediengerätes in beziehungsweise außer Eingriff gebracht werden kann.

Ein seitliches Umkippen von Gegenständen auf dem Regalbediengerät wird vermieden, wenn auf dem Regalbediengerät eine bewegliche Führungswand vorgesehen ist. Deren Abstand von einer ortsfesten Führungswand wird an die Größe des jeweiligen Gegenstandes angepasst.

Eine einfache Führung des Kuppelschlittens auf dem Regalbediengerät besteht in der Verwendung einer Führungsschiene mit dem selben Profil, wie es die Führungsschiene in dem jeweiligen Regalfach hat. Um den unvermeidbaren Versatz zwischen der Führungsschiene auf dem Regalbediengerät und in dem Regal auszugleichen, können die einander gegenüberstehenden Enden der Führungsschienen trichterförmig erweitert sein.

Im übrigen sind Weiterbildungen der Erfindung Gegenstand von Unteransprüchen. Dabei sollen auch solche Merkmalskombinationen als beansprucht angesehen werden, auf die kein ausdrückliches Ausführungsbeispiel gerichtet ist.

In der Zeichnung ist ein Ausführungsbeispiel des Gegenstandes der Erfindung dargestellt. Es zeigen:
- Fig. 1: ein erfindungsgemäßes Regallager in einer perspektivischen Übersichtdarstellung,
- Fig. 2: die Führungsschiene des Regallagers nach Figur 1 in Verbindung mit dem Schlitten, in einer geschnittenen perspektivischen Darstellung,
- Fig. 3: die Führungsschiene in Verbindung mit dem Mitnehmerschlitten, in einer geschnittenen perspektivischen Darstellung,
- Fig. 4: einen Ausschnitt aus dem Regallager unter Veranschaulichung der wesentlichen Teile des Regalbediengerätes, in einer perspektivischen Darstellung,
- Fig. 5: einen Ausschnitt aus der Figur 4 unter Veranschaulichung des Zusammenwirkens des Antriebsschlittens mit dem Mitnehmerschlitten, in einer perspektivischen Darstellung, und
- Fig. 6 - 10: einen Ausschnitt aus dem Regallager entsprechend Figur 4 aus einer anderen perspektivischen Sicht, unter Veranschaulichung unterschiedlicher Schritte bei der Entnahme eines Gegenstandes.

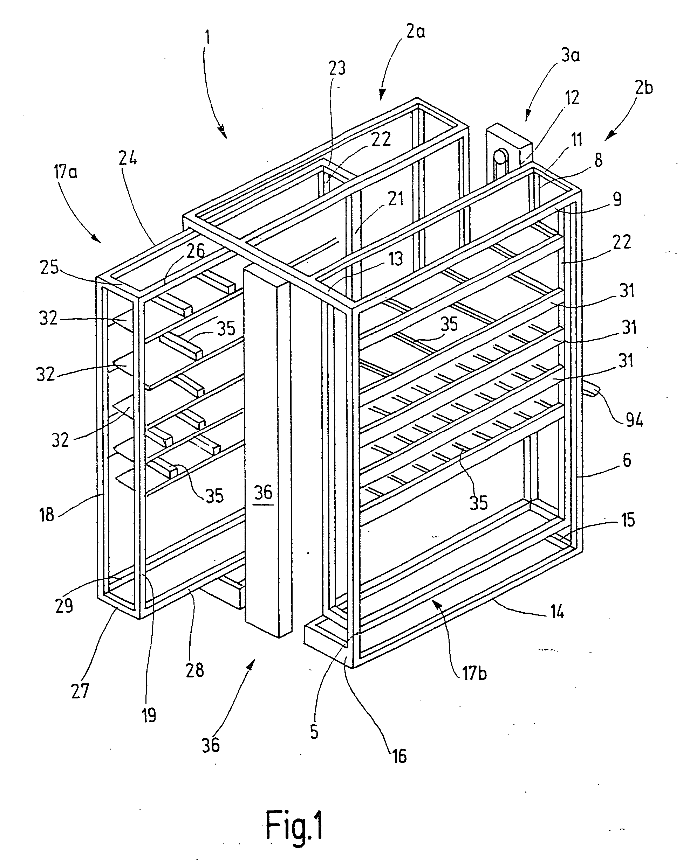

In der Figur 1 ist perspektivisch und schematisiert ein Regallager 1 veranschaulicht, wie es beispielsweise in Apotheken zum Aufbewahren und Lagern von verpackten oder unverpackten Medikamenten verwendet werden kann, die eine verhältnismäßig kurze Umschlagszeit aufweisen. Die Produkte sind in dem Regallager 1 chaotisch gespeichert, wobei in einem nicht veranschaulichten Computersystem darüber Buch geführt wird, wo welches Medikament eingelagert ist.

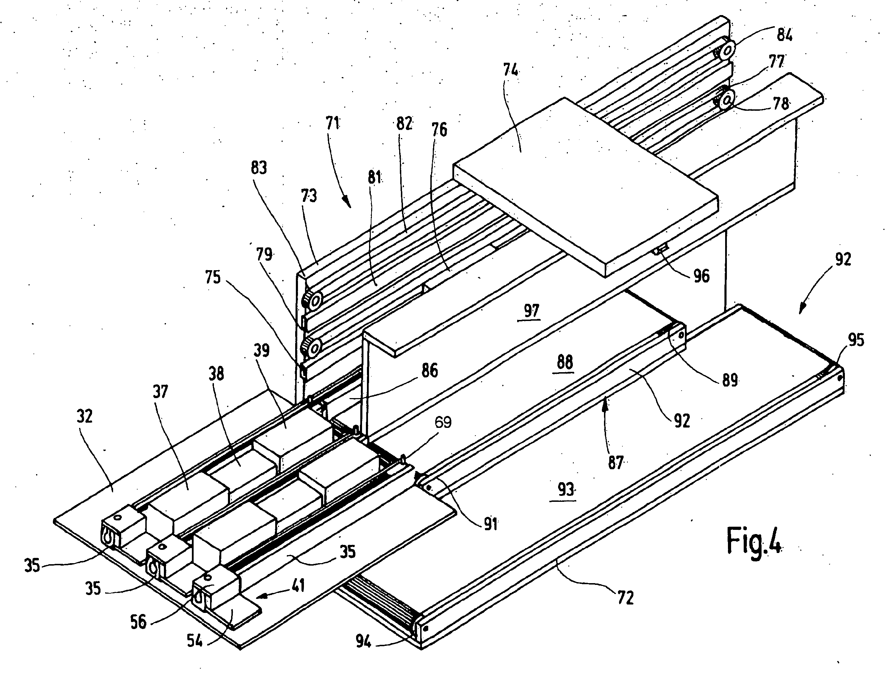

Zu dem Regallager 1 gehören zwei einander gegenüberstehende Regalgestelle 2a und 2b, die sich mit ihrer Breitseite im Abstand gegenüber befinden. Sie sind an einer oberen Querkante miteinander verbunden. In dem Zwischenraum zwischen den beiden Regalgestellen 2a und 2b ragen zwei vertikale Pfeiler 3a und 3b auf, an denen ein Regalbediengerät (Figur 4) vertikal geführt ist.

Jedes der beiden Regalgestelle 2 hat eine quaderförmige Außengestalt, wobei von dem Quader lediglich dessen Kanten existieren.

Das Regalgestell 2b setzt sich aus 3 vertikal aufragenden Pfeilern 5, 6, 7 zusammen, die an ihren Enden jeweils durch Querstreben 9, 11 und entsprechende Querstreben unten verbunden sind, von denen lediglich die Querstreben 14, 15 und 16 erkennbar sind. Parallel zu den Querstreben 9 und 11 verlaufen weiter Querstreben 12 und 13, die endseitig wie gezeigt miteinander verbunden sind; dort fehlt der entsprechende vierte Pfeiler. Die Pfeiler 5...7 und die Querstreben 9...16 sind jeweils an den Ecken starr miteinander verbunden.

Das Regalgestell 2a ist in der gleichen Weise mit denselben Abmessungen aufgebaut, weshalb sich eine erneute Erläuterung erübrigt. Die Bezugszeichen des Regalgestells 2b gelten in der gleichen Weise für die spiegelbildlichen Konstruktionselemente des Regalgestells 17b.

In jedem der beiden Regalgestelle 2a und 2b sind zwei Ziehgestelle 17a und 17b längsverschieblich untergebracht. Sie sind beispielsweise mittels nicht gezeigter an sich bekannter Kugelführungen in dem jeweiligen Regalgestell 2a, 2b oben aufgehängt, wozu diese Führungselemente zweckmäßigerweise im Bereich der oberen Querstreben 9 und 12 angebracht sind. Auf diese Weise sind die beiden Ziehgestelle 17, wie am Beispiel des Ziehgestells 17a in Figur 1 zu erkennen ist, zu der dem Betrachter zugekehrten Schmalseite der beiden Regalgestelle 2a, 2b herausziehbar. Das Herausziehen in der entgegengesetzten Richtung ist gesperrt, damit die beiden Ziehgestelle 17 im eingeschobenen Zustand eine definierte Endlage in dem betreffenden Regalgestell 2 aufweisen. Damit die Ziehgestelle 17 ohne nennenswerten Spalt bis an das Regalbediengerät heranreichen können, fehlt, wie oben, erwähnt der vierte Pfeiler und die beiden Querbalken 13 sind direkt miteinander verbunden.

Ähnlich wie das Regalgestell 2 ist das Ziehgestell 17a ein quaderförmiges Gebilde, von dem lediglich die Kanten in Gestalt von vertikal verlaufenden Streben 18, 19, 21, 22 und an den jeweiligen Enden angeordnete Querstreben 23, ... 29 bestehen. Wegen der Darstellung ist die hintere untere Querstrebe des Ziehgestells 17a verdeckt.

Das Ziehgestell 17b ist in der identischen Weise ausgeführt, wie das Ziehgestell 17a weshalb sich eine erneute Beschreibung erübrigt. Die Bezugszeichen des Ziehgestells 17a gelten in sinngemäß der gleichen Weise für die spiegelbildlichen Konstruktionselemente des Ziehgestells 17b.

Wie Figur 1 weiter zu entnehmen ist, bilden sowohl das Regalgestell 2 als auch das Ziehgestell 17 relativ große Flachseiten, die in jeder Betriebsstellung zueinander parallel ausgerichtet sind. Diese Flachseiten, mit denen sich jeweils die beiden Regalgestelle 2a und 2b gegenüber stehen, werden als Vorderseite bezeichnet, d.h. jene Flachseiten, die dem Zwischenraum unmittelbar benachbart sind, zwischen denen das Regalbediengerät 4 sich bewegt.

Die von abliegenden Flachseiten werden als Rückseiten angesehen. Zwischen den vertikalen Streben 18 und 22 jedes Ziehgestells 17 erstrecken sich horizontal und damit parallel zu der Querstrebe 24 und 26, mehrere Querbalken 31, die mit den vertikalen Streben 18 und 22 verstellbar verbunden sind. Verstellbar sind sie in dem Sinne, dass sie in beliebige Höhen an den beiden vertikalen Streben 18 und 19 befestigt werden können, wobei sie jedoch immer in horizontaler Ausrichtung angeordnet sind.

Jeder der Querbalken 31 trägt eine zugehörige Regalbodenplatte 32, die eben und flach ausgeführt ist. Alle Regalbodenplatten haben die selbe räumliche Tiefe, gemessen ab der Vorderseite des betreffenden Ziehgestells. Die Tiefe ist so bemessen, dass die größte zu erwartende Verpackungseinheit in ihrer Länge der Tiefe nach in dem Regal zwischen der Vorderseite und der Rückseite unterzubringen ist. Wenn die Verpackungen kleiner sind, können zur Ausnutzung der Tiefe mehrere unterschiedliche Verpackungen in einer Reihe hintereinander eingelagert werden.

Figur 4 zeigt einen Ausschnitt aus einer Regalbodenplatte 32. Wie dort zu erkennen ist sind auf der Regalbodenplatte 32 mehrere Führungsschienen 35 parallel nebeneinander befestigt. Zwischen jeweils zwei benachbarten Führungsschienen 35 ist ein Regalfach der Breite nach definiert, während die Höhe des Regalfaches durch die darüber befindliche Regalbodenplatte 32 oder die Querbalken 24, 26 begrenzt ist.

Zwischen den Führungsschienen 35 finden die einzulagernden Produkte 37, 38 und 39 Platz. Mittels der Führungsschiene 35 ist je Regalfach ein Schieber 41 geführt. Die Führungsschiene 35 dient dazu den dazugehörigen Schieber 41 in Richtung parallel zu der Längserstreckung der Führungsschiene 35 zu führen. Die Führungsschiene 35 reicht von der der Rückseite benachbarten hinteren Kante der Regalbodenplatte 32 bis zu der der Vorderseite benachbarten Kante, d.h. ihre Länge entspricht der Tiefe der Regalbodenplatten 32, die allesamt die selbe räumlich Tiefe aufweisen.

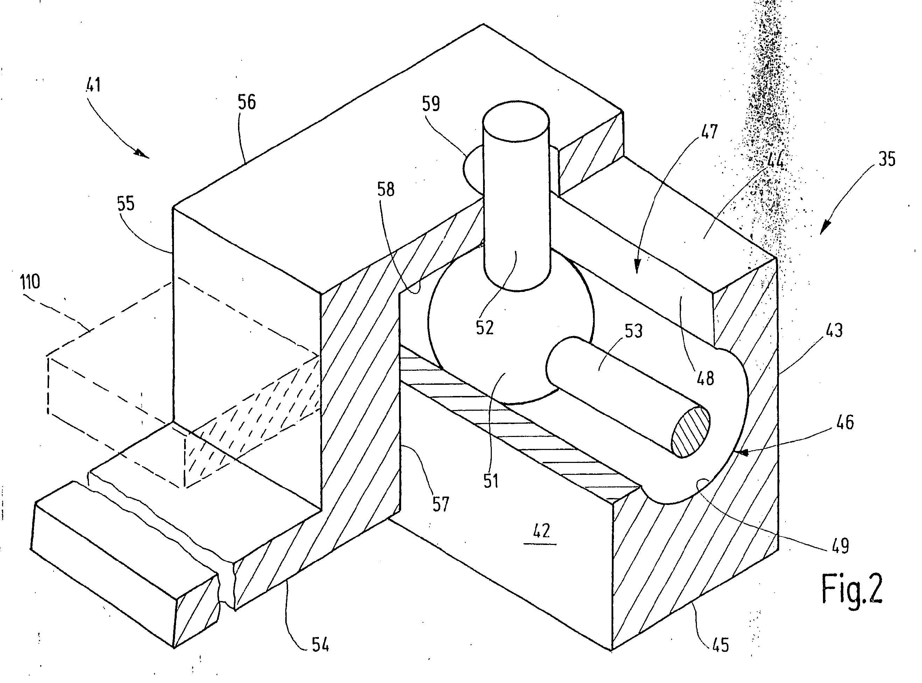

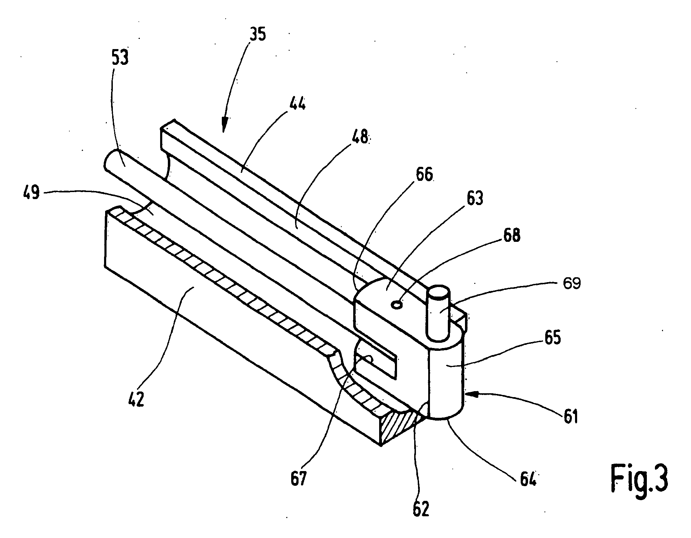

Die Gestalt der Führungsschiene 35 und deren Verbindung mit dem zugehörigen Schieber 41 wird nachstehend anhand der Figuren 2 und 3 erläutert.

Die Außenseite der Führungsschiene 35 wird in Längsrichtung von zwei vertikal verlaufenden ebenen Flachseiten 42 und 43 sowie einer Oberseite 44 und einer Unterseite 45 begrenzt. Diese Seiten verlaufen paarweise im Abstand zueinander parallel und begrenzen gemeinsam einen rechteckigen Querschnitt.

Mit der Unterseite 45 ist die Führungsschiene 35 mittels nicht veranschaulichter Schrauben oder dergleichen auf der Regalbodenplatte 32 befestigt. Die Länge der Führungsschiene ist so bemessen, dass die Tiefe der Regalbodenplatte 32 vollständig ausgenutzt werden kann. Die Führungsschiene 35 ist mit der Vorderseite mit der entsprechenden Kante der Regalbodenplatte 32 bündig.

Im Inneren enthält die Führungsschiene 35 eine Führungsnut 46, die sich nach oben in der Oberseite 44 in einen Nutenschlitz 47 öffnet, der von zwei zueinander parallelen Schlitzrändern 48 begrenzt ist. Wegen der aufgeschnittenen Darstellung ist lediglich der eine Schlitzrand 48 zu erkennen. Im Inneren der Führungsschiene 35 geht der Nutenschlitz 47 in eine zylindrische Bohrung 49 über, die sich ebenso wie der Nutenschlitz 47 über die gesamte Länge der Führungsschiene 35 erstreckt. Auf diese Weise setzt sich das Querschnittsprofil der Führungsnut 46 aus einem Kreisabschnitt und einem Rechteckabschnitt zusammen, wobei der Rechteckabschnitt dem Nutenschlitz 47 entspricht. Die Weite des Nutenschlitzes 47 ist geringer als der Durchmesser der zylindrischen Bohrung 49.

In der zylindrischen Bohrung 49 bewegt sich ein kugelförmiger Gleiter 51, in dem ein zylindrischer Kuppelzapfen 52 steckt. Der zylindrische Kuppelzapfen 52 ragt durch den Nutenschlitz 47 nach oben aus der Führungsnut 46 ein Stück weit heraus. Sein Durchmesser entspricht der Weite des Nutenschlitzes 47, so dass er mit relativ wenig Spiel und klemmfrei durch den Nutenschlitz 47 bewegt werden kann. Das Gleiche gilt für den Kugelgleiter 51 in der zylindrischen Bohrung 49.

An dem Kugelgleiter 51 ist ferner eine Verbindungsstange 53 angebracht, deren Durchmesser wesentliche kleiner als der Durchmesser der zylindrischen Bohrung 49 ist.

Der mit dem Kugelgleiter 51 gekuppelte Schieber 41 setzt sich aus einem plattenförmigen Abschnitt 54, einem vertikal aufragenden Steg 55 und einem plattenförmigen oberen Abschnitt 56 zusammen. Der Stegabschnitt 55 ist mit einer glatten Rückseite 57 versehen, die gleitend an der Außenseite 52 der Führungsschiene 35 anliegt. Der obere plattenförmige Fortsatz 56 ist an seiner Rückseite 58 ebenfalls glatt eben und liegt mit dieser Fläche auf der Oberseite 44 der Führungsschiene 35 auf.

In dem oberen plattenförmigen Fortsatz 56 befindet sich ein Langloch 59, dessen Längsachse parallel zur Längserstreckung der Führungsschiene 35 liegt und dessen Breite so bemessen ist, dass es mit wenig Spiel den Kuppelzapfen 52 aufnehmen kann. Das Langloch 59 ist jedoch in Längsrichtung der Führungsschiene 35 so bemessen, dass der Kugelgleiter 51 um eine Querachse geringfügig kippen kann.

Der Schieber 41 ist mit den beiden Rückseiten 57 und 58 in Verbindung mit dem Mitnehmerzapfen 52 an der Außenseite der Führungsschiene 35 zwangsgeführt. Sein Fortsatz 54 ist in jeder beliebigen Stellung mit seiner längsten Erstreckung rechtwinklig zu der Führungsschiene 35 ausgerichtet, während der andererseits parallel zu der Oberseite der Regalbodenplatte 32 liegt. Eine zu der sichtbaren Schnittfläche parallele Fläche an dem abgeschnittenen Teil dient als Anschlagfläche für die Produkte 37...39.

Das andere Ende der Verbindungsstange 53 ist gelenkig mit einem Mitnehmerschlitten 61 gekuppelt. Der Mitnehmerschlitten 61 ist wiederum ein etwa quaderförmiges Gebilde, mit zwei sich gegenüberliegenden großen ebenen Flankenseiten 62, von denen in Figur 3 wegen der Darstellung lediglich eine zu erkennen ist. Der Mitnehmerschlitten 61 wird ferner von einer Oberseite 63 begrenzt, die plan ist, sowie eine Unterseite 64 und zwei kurzen Schmalseiten 65 und 66.

Die Unterseite 64 ist gekrümmt, und zwar liegt die Krümmungsachse in Längsrichtung der langen Erstreckung des Mitnehmerschlittens 61 und damit in Längsrichtung der Führungsschiene 35. Der Krümmungsradius ist allerdings kleiner als der Radius der zylindrischen Bohrung 49. Der Abstand zwischen den Seitenflanken 62 ist etwas geringer als der Abstand zwischen den Schlitzrändern 48.

Wenn der Mitnehmerschlitten 61 mit seiner Unterseite 64 auf dem dem Schlitz 47 gegenüberliegenden Bereich der zylindrischen Bohrung 49 aufsteht, ist seine Oberseite 63 etwa bündig mit der Oberseite 44 der Führungsschiene 35.

Aufgrund des Flankenspiels in dem Nutenschlitz 47 kann er sich in dem Nutenschlitz 47 nicht verklemmen.

Im Bereich seiner hinteren Seite 66 ist der Mitnehmerschlitten 61 gegabelt und bildet ein parallelflankiges Maul 67, in das die Verbindungsstange 53 hineinragt. Mittels eines Scharnierbolzens 68, der von der Oberseite 63 her durch eine Bohrung in dem Mitnehmerschlitten 61 und eine korrespondierende Bohrung in der Verbindungsstange 53 hindurchführt, ist die Verbindungsstange 53 an dem Mitnehmerschlitten 61 anscharniert.

Das Scharnier zwischen dem Mitnehmerschlitten 61 und der Verbindungsstange 53 ermöglicht ein geringfügiges Abknicken des Mitnehmerschlittens 61 gegenüber der Verbindungsstange 53 und auch gegenüber der Längsachse der Führungsschiene 35. Der Zweck dieser Maßnahme ist weiter unten noch im einzelnen erläutert.

Neben seiner Vorderseite 65 trägt der Mitnehmerschlitten 61 einen nach oben aufragenden Mitnehmerzapfen 69.

Von dem Regalbediengerät 71 sind in Figur 4 nur jene Teile veranschaulicht, die für das Verständnis der Arbeitsweise des erfindungsgemäßen Regallagers von Bedeutung sind. Die Mittel um das Regalbediengerät 71 zwischen den Führungssäulen 3a und 3b zu führen und zu bewegen sind nicht gezeigt. Ebenso fehlen Antriebe, Stromversorgungseinrichtungen und der vollständige Rahmen des Regalbediengerätes 71. Die Wiedergabe dieser Teile würde zu einer Detailvielfalt führen, die die Figur vollkommen unübersichtlich gestalten würde und dazu führen würde, dass das Wesentliche nicht mehr zu erkennen ist.

Das Regalbediengerät 71 weist eine Tiefe auf, die etwa doppelt so groß ist wie die Tiefe der Regalfächer. Unter Tiefe des Regalbediengeräts 71 ist der Abstand von dessen Stirnenden zu verstehen, die den Regalfächern gegenüber stehen.

Von dem Grundrahmen des Regalbediengerätes 71 ist lediglich ein Ausschnitt seines Bodens 72 sowie ein Teil einer der Seitenwände 73 gezeigt. Ferner ist eine Quertraverse 74 veranschaulicht, die an der Oberkante der Seitenwand 73 angebracht ist, und deren anderes Ende auf der gegenüberliegenden nicht gezeigten Seitenwand aufliegt und dort ebenfalls verankert ist.

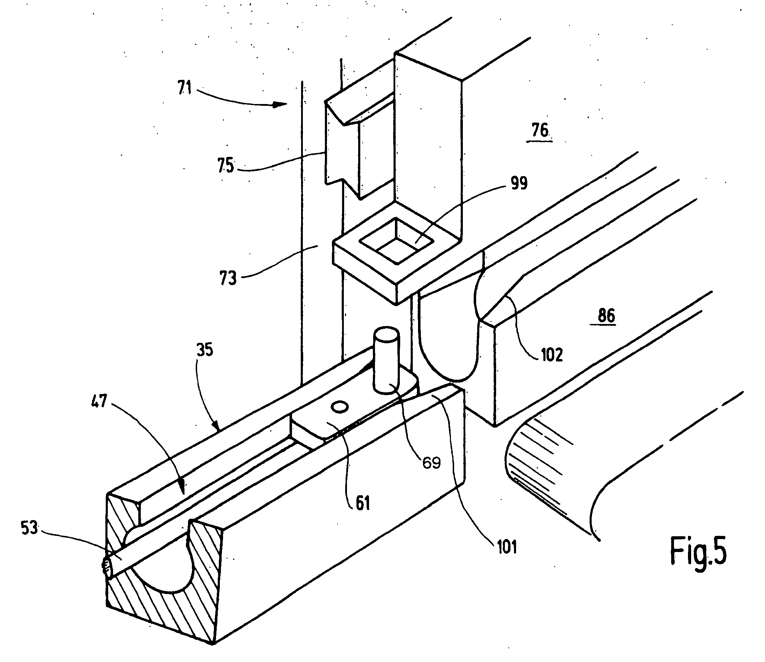

Die Seitenwand 73 trägt auf einer Flachseite eine im Querschnitt X-förmige Führungsschiene 75, die über die Länge der Seitenwand 73 durchläuft und parallel zu dem Boden 72 horizontal ausgerichtet ist. Auf ihr ist ein in der Figur überwiegend verdeckter Antriebsschlitten 76 mit entsprechenden Führungsrollen gelagert. Der Antriebsschlitten 76 ist in Figur 5 vergrößert im Ausschnitt gezeigt.

Die Bewegung des Antriebsschlittens 56 wird mit Hilfe eines Zahnriemens 77 erzeugt, der über zwei endseitig gelagerte Rollen 78 und 79 umläuft. Eine der Rollen 78, 79 ist durch einen nicht gezeigten Schrittmotor in Bewegung zu versetzen, wobei durch entsprechende Sensoren einer zentralen Steuerung die exakte Position des Antriebsschlittens 56 bekannt ist.

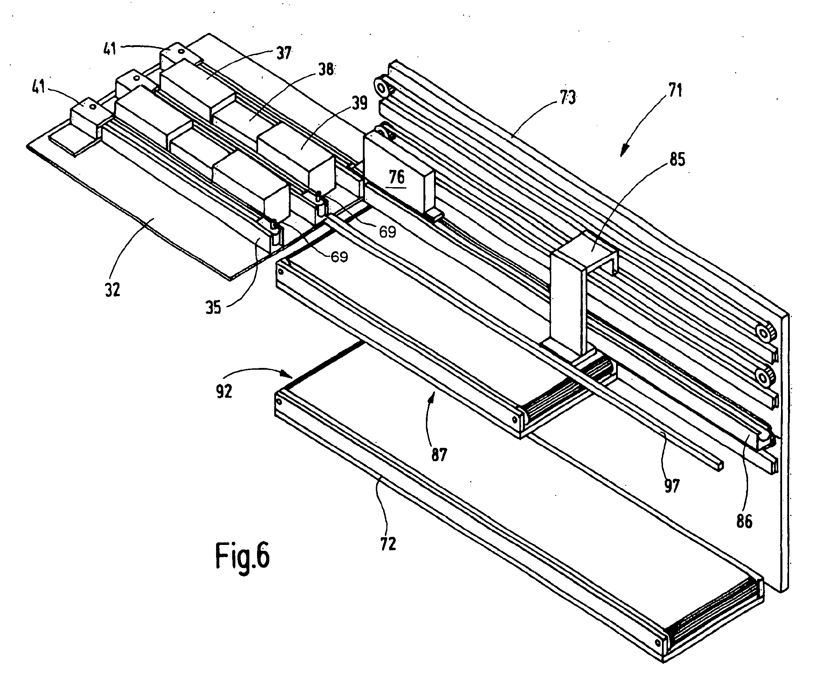

Oberhalb des endlosen Zahnriemens 77 sitzt auf der Wand 73 eine weitere im Querschnitt X-förmige Führungsschiene 81 der ein darüber befindlicher weiterer endloser Zahnriemen 82 zugeordnet ist, der um Umlenkrollen 83 und 84 umläuft. Der Zahnriemen 82 dient dem Antrieb eines auf der Führungsschiene 79 geführten Schiebers 85, wie er in den Figuren 6 und folgende zu erkennen ist.

Unterhalb der Führungsschiene 75 ist an dieser eine Führungsschiene 86 befestigt, deren Profil mit dem erläuterten Profil der Führungsschiene 35 übereinstimmt. Die Führungsschiene 86 ist an dem Regalbediengerät 71 derart befestigt, dass in der entsprechenden Position die Führungsschiene 86 eine lineare Fortsetzung der jeweiligen Führungsschiene 35 bildet.

Unmittelbar neben der Unterseite der Führungsschiene 86 befindet sich eine Endlosfördereinrichtung 87 mit einem Förderband 88 dessen Arbeitstrumm horizontal verläuft. Das Endlosförderband läuft über zwei Umlenkrollen 89 und 91 um, die in einem Gestell 92 um zueinander parallele Achsen drehbar gelagert sind. Eine der Umlenkrollen 89, 91 ist wiederum durch einen nicht veranschaulichten Motor wahlweise in Umdrehungen zu versetzen.

Der gesamte Rahmen 92 der Endlosfördereinrichtung 87 kann in horizontaler Richtung in dem Rahmen des Regalbediengerätes 71 linear verschoben werden. Die Längserstreckung der endlosen Fördereinrichtung 87 ist deutlich kleiner, als es dem Abstand zwischen den beiden Ziehregalen 17 entspricht. Die Länge ist etwa gleich der Tiefe der Regalfächer.

Die Mittel zur Lagerung des Rahmens 92 in dem Regalbediengerät 71 sind nicht veranschaulicht.

Unterhalb der Endlosfördereinrichtung 87 ist oberhalb des Bodens 72 eine weitere Endlosfördereinrichtung 92 vorgesehen. Die Endlosfördereinrichtung 92 umfasst ein Endlosförderband 93, das um zwei endseitige Umlenkrollen 94 und 95 umläuft. Die beiden Umlenkrollen 94 und 95 befinden sich unmittelbar neben den beiden Stirnkanten des Regalbediengerätes 71, d.h. das Arbeitstrumm der Endlosfördereinrichtung 92 nutzt die Tiefe des Regalbediengerätes 71 maximal aus.

An der Unterseite der Quertraverse 74 ist schließlich eine Führungsschiene 96 vorhanden, an der eine verstellbare Wand 97 verschieblich geführt ist. Die Schiene 96 erstreckt sich rechtwinklig zu der Wand 73 und parallel zu den Arbeitstrummen der beiden Endlosfördereinrichtungen 87 und 92.

Bevor im einzelnen die Gesamtfunktion des Regallagers erläutert wird, wird in Verbindung mit Figur 5 das Zusammenspiel des Mitnehmerschlittens 61 mit dem Antriebsschlitten 76 erläutert. Der Antriebsschlitten 76 trägt an seinen stirnseitigen Enden jeweils eine Kupplungsöse 99, von denen wegen der Ausschnittsdarstellung von Figur 5 lediglich eine zu erkennen ist.

Das Zusammenspiel zwischen dem Regalbediengerät 71 und dem Schieber 41 sieht wie folgt aus:

Zur Entnahme eines Produktes 37... 38 fährt das Regalbediengerät 71 vor das entsprechende Regalfach. Es hält in einer Position an, in der die Führungsschiene 86 des Regalbediengerätes 71 so genau wie möglich mit der Führungsschiene 35 des betreffenden Regalfaches in horizontaler Richtung fluchtet. Es stoppt jedoch in einer Position, in der die Kupplungsöse 99 um die Länge des Mitnehmerzapfens 69 nach oben verschoben ist. Sodann wird die Antriebseinrichtung für den Antriebsschlitten 76 in Gang gesetzt und der Antriebsschlitten 76 zu dem betreffenden ausgewählten Regalfach vorbewegt. Während dieser Bewegung ragt die Öse 99 über die Stirnseite des Regalbediengerätes 71 über und in das betreffende Regalfach hinein. Die Bewegung wird eingestellt, sobald die Kupplungsöse 99 mit dem Kupplungszapfen 69 in vertikaler Richtung fluchtet. Diese Position ist in Figur 5 dargestellt.

Nach Erreichen dieser Position fährt das Regalbediengerät 71 vertikal nach unten, d.h. parallel zur Längsachse des Kupplungszapfens 69 bis die Führungsschiene 86 vollständig mit der Führungsschiene 35 fluchtet. Hierbei taucht der Kupplungszapfen 69 von unten her durch die Mitnehmeröse 99 hindurch, wodurch eine formschlüssige Verbindung zwischen dem Antriebsschlitten 76 und dem Mitnehmerschlitten 61 hergestellt wird.

Jede Bewegung des Mitnehmerschlittens 67 wird von nun an auf den Mitnehmerschlitten 61 und von dort über die Verbindungsstange 53 zu dem Kugelgleiter 51 und schließlich auf den Schieber 41 übertragen.

Wenn durch die Antriebseinrichtung, die dem Antriebsschlitten 76 zugeordnet ist und die auf dem Regalbediengerät 71 vorhanden ist, der Antriebsschlitten 76 längs seiner Führungsschiene 75 in Richtung auf die gegenüberliegende Seite des Regalbediengerätes bewegt wird, zieht die Kupplungsöse 99 den Mitnehmerschlitten 61 in die Führungsschiene 86 auf dem Regalbediengerät 71. Gleichzeitig mit dieser Bewegung wird auch der damit gekuppelte Schieber 71 in Richtung auf das Regalbediengerät 71 bewegt. Da die Bewegung des Antriebsschlittens 67 gesteuert ist, kann der auf diese Weise angetriebene Schieber 41 ein exakt definiertes und bekanntes Wegstück verschoben werden.

Gegen Ende der Operation wird der Antrieb für den Antriebsschlitten 76 in der entgegengesetzten Richtung in Bewegung gesetzt. Der Antriebsschlitten 76 befördert den Mitnehmerschlitten 61 aus der Führungsschiene 86 zurück in die Führungsschiene 35 des betreffenden Regalfaches.

Konstruktionsbedingt muss zwischen dem Regalbediengerät 71 und der Stirnseite aller Regalfächer ein Spalt von ca. 9 mm vorhanden sein, damit keine Teile des Regalbediengerätes 71 bei der Bewegung mit den Regalfachböden oder anderen Teilen kollidieren. Die Länge des Mitnehmerschlittens 61 in Richtung parallel zu seiner Verschiebbewegung ist so bemessen, dass er ohne weiters diesen Spalt überbrücken kann, der auch zwischen den Stirnseiten der miteinander fluchtenden Führungsschienen 86 und 35 vorhanden ist.

Damit unvermeidbare Fluchtungsfehler in Horizontalrichtung nicht zu einer Verklemmung führen können, ist der Nutenschlitz 47 an demjenigen Ende der Führungsschiene 35, das dem Regalbediengerät 71 gegenüberliegt bei 101 trichterförmig erweitert. Eine entsprechende trichterförmige Erweiterung 102 findet sich an dem gegenüberliegenden Ende der Führungsschiene 86, die, wie bereits erwähnt, das selbe Querschnittsprofil aufweist wie die Führungsschiene 35.

Bei einem Fluchtungsfehler stellt sich der Mitnehmerschlitten 61 zwischen den Führungsschienen 86 und 35 geringfügig schräg, entsprechend dem Fluchtungsfehler. Um die Möglichkeit dieser Schrägestellung nicht zu behindern, ist der Mitnehmerschlitten 61 über den Scharnierbolzen 68 gelenkig mit der Verbindungsstange 53 gekuppelt.

Die mehr oder weniger starke Schrägstellung des Mitnehmerschlittens 61 führt ebenfalls zu einer geringfügigen Schwenkbewegung der Verbindungsstange 53 in der zylindrischen Bohrung 49. Dieser Bewegung kann der Kugelgleiter 51 ohne weiteres folgen.

Auch ein geringer vertikaler Versatz kann ausgeglichen werden. Angenommen die Führungsschiene 86 in dem Regalbediengerät 71 steht etwas zu hoch, dann würde beim Herausziehen des Mitnehmerschlittens 61 auf das Regalbediengerät 71 der Mitnehmerschlitten 61 angehoben werden. Eine solche Anhebebewegung ist möglich, weil der Mitnehmerschlitten 61 mit seinen Seitenflanken 62 ohne weiteres vertikal durch den Nutenschlitz 47 hindurch bewegbar ist. Die Verbindungsstange 53 wird bei einer solchen Vertikalbewegung ebenfalls angehoben und vollführt eine Schwenkbewegung um eine horizontale Querachse durch den Kugelgleiter 51. Die Schwenkbewegung ist möglich und wird auch von dem Schieber 41 ferngehalten. Bei einer solchen geringfügigen Schwenkbewegung bewegt sich der Mitnehmerzapfen 52 in dem Langloch 59.

Bei einer Tieferstellung des Regalbediengerätes tritt sinngemäß die umgekehrte Konstellation auf.

Da der Durchmesser der Verbindungsstange 53 verhältnismäßig kein ist, verglichen mit dem Durchmesser der zylindrischen Bohrung 49 können verhältnismäßig starke Fluchtungsfehler von bis zu 5 mm in jeder Richtung ohne weiteres überbrückt werden.

Das Entkuppeln des Antriebsschlittens 76 von dem Mitnehmerschlitten 71 geschieht sinngemäß in der umgekehrten Weise. Zunächst fährt der Antriebsschlitten 76 längs der Wand 73 des Regalbediengerätes 71 wiederum bis zur entsprechenden Stirnseite vor, soweit bis der Mitnehmerschlitten 61 vollständig in die Führungsschiene 35 zurückgeschoben ist. Der teilzylindrische gekrümmte Boden des Mitnehmerschlittens 61 erreicht dabei eine selbsttätige Zentrierung zwischen den trichterförmigen Erweiterungen 101 und 102 beim Übergang von der Führungsschiene 86 in die Führungsschiene 35. Die Bewegung des Antriebsschlittens 76 wird gestoppt, wenn der Mitnehmerschlitten 61 mit seiner Vorderseite 65 mit der freien Stirnfläche der Führungsschiene 35 etwa fluchtet. Nach Erreichen dieser Position fährt das Regalbediengerät 71 ein kurzes Stück nach oben, entsprechend der Länge des Mitnehmerzapfens 69, wodurch die Mitnehmeröse 99 von dem Mitnehmerzapfen 69 freikommt. Anschließend wird der Schlitten 76 zumindest soweit zurückgezogen, bis er hinter der Stirnfläche des Regalbediengerätes 71 zurückspringt. Dadurch ist an allen Stellen zwischen den Regalfächern und dem Regalbediengerät wiederum ein freier Spalt von ca. 9 mm hergestellt. Das Regalbediengerät 71 kann ohne Kollision vor den Regalfächern hin und her bewegt werden.

Da beidseitig des Regalbediengerätes jeweils Regalfächer in den Ziehgestellen 17 enthalten sind, ist das Regalbediengerät 71 so ausgebildet, dass es die Regalfächer zu beiden Seiten bedienen kann. Entsprechend enthält der Antriebsschlitten 76 Mitnehmerösen 99 an beiden Stirnenden.

Die Arbeitsweise des neuen Regallagers 1 beim Entnehmen von Produkten wird nunmehr in Verbindung mit den Figuren 6 bis 10 erläutert:

In einem Regalfach liegen beispielsweise die Gegenstände 37, 38 und 39 hintereinander. Es wird der Gegenstand 38 benötigt. Er soll zu einer nicht gezeigten Kommisionierstation geschafft werden. Das Regalbediengerät 71 fährt das betreffende Regalfach an und kuppelt in der vorstehend ausführlich erläuterten Weise den Antriebsschlitten 76 an den Mitnehmerschlitten 61 des betreffenden Regalfaches. Sodann wird die verstellbare Wand 97 auf die Breite des angefahrenen Regalfaches eingestellt. Diese Position ist in Figur 6 gezeigt, wobei aus Gründen der Anschaulichkeit von der einstellbaren Wand 97 nur deren unterer Bereich gezeigt ist, weil sie sonst die für die Erläuterung wesentlichen Teile abdecken würde.

Fig. 6 zeigt die Situation nach dem Ankuppeln des Antriebsschlittens.

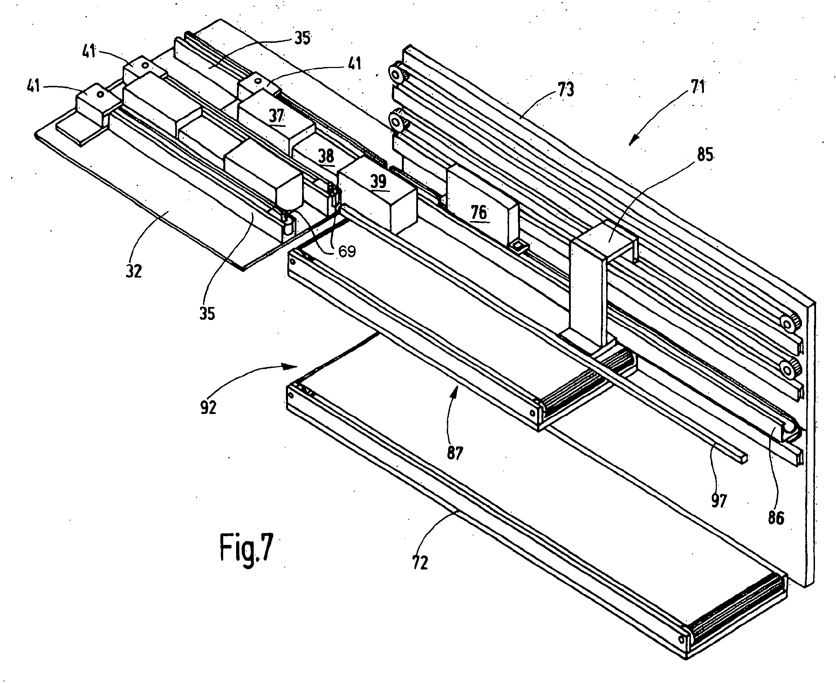

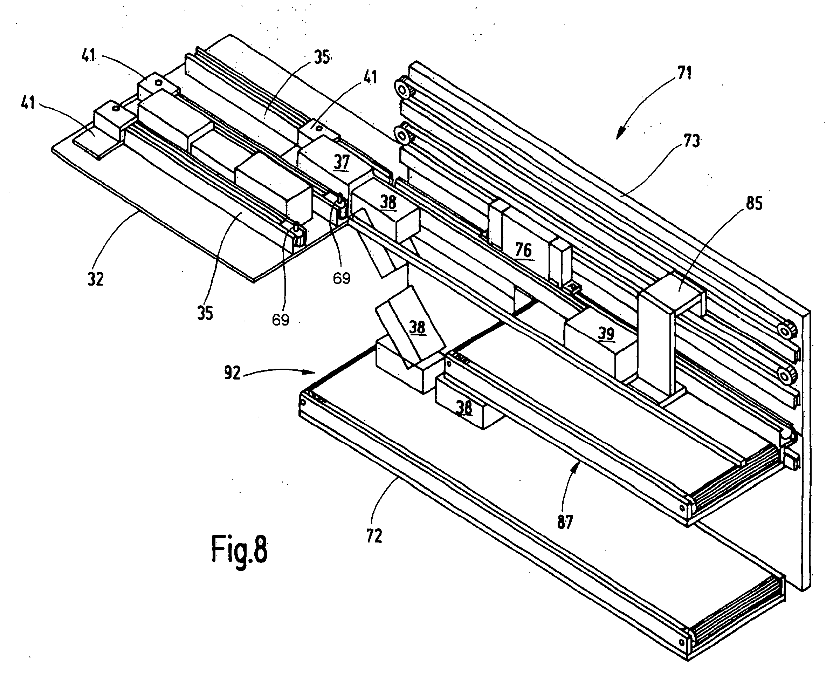

Nach dem Ankuppeln wird wie Fig. 7 veranschaulicht der Antriebsschlitten 76 in eine Richtung in Bewegung gesetzt, in der sich der in dem betreffenden Regalfach befindliche Schieber 41 in Richtung auf das Regalbediengerät 71 bewegt. Die Endlosfördereinrichtung 76 wurde zuvor zu jenem Stirnende des Regalbediengeräts 71 geschafft, das dem betreffenden Regalfach unmittelbar benachbart ist. Das Endlosförderband 88 wird ebenfalls in Bewegung gesetzt. Sein Arbeitstrumm läuft synchron mit dem Antriebsschlitten 76. Mittels der so beschriebenen Bewegung wird zunächst der Gegenstand 39 auf das Arbeitstrumm der Endlosfördereinrichtung 87 geschafft. Sobald er vollständig auf dem Arbeitstrumm aufliegt, wird die Bewegung des Antriebsschlittens 76 gestoppt, während die Endlosfördereinrichtung 87 noch ein kurzes Stück weiterläuft. Die Endlosfördereinrichtung fährt hernach aus der Position nach Figur 7 in die Position nach Figur 8. In dieser Stellung tut sich eine Öffnung zwischen dem Regalfach und dem benachbarten Stirnende der Endlostransporteinrichtung 87 auf. Wenn diese Öffnung eine ausreichende Größe erreicht hat, wird die Verschiebbewegung der Endlosfördereinrichtung 87 angehalten und der Antriebsschlitten 76 erneut in Bewegung gesetzt, um weiter die Gegenstände 37 und 38 aus dem Regalfach herauszubefördern.

Wenn der Schwerpunkt des Gegenstandes 38 über die Kante des Regalfachbodens 32 gelangt ist, fällt der Gegenstand 38 durch die Öffnung hindurch auf die darunter befindliche Endlosfördereinrichtung 92. Dieser Vorgang ist in Figur 8 veranschaulicht. Eine synchrone Bewegung des Arbeitstrumms der endlosen Fördereinrichtung 92 sorgt für eine geordnete Ablage des herunterfallenden Gegenstandes 37.

Die Bewegung des Antriebsschlittens 76 und damit des Schiebers 41 wird gestoppt, wenn der noch in dem Regalfach verbliebene Gegenstand 37 die Kante des Regalfachbodens 32 erreicht.

Im weiteren Verlauf der Entnahmeoperation fährt nun die Endlosfördereinrichtung 87 zurück zu der Stirnseite des Regalbediengerätes 71, die dem bedienten Regalfach gegenüberliegt. Die Öffnung zwischen dem Fachboden 32 und der Endlosfördereinrichtung 87 schließt sich wieder bis auf den konstruktiv bedingten Restspalt von 9mm.

Gleichzeitig mit der Vorbewegung der Endlosfördereinrichtung 87 wurde der Antriebsschlitten 76 in Richtung auf das betreffende Regalfach vorbewegt. Dadurch wird der Schieber 41 in seine Ruhelage in dem Regalfach gebracht, in der er den größten Abstand von dem Regalbediengerät 71 zugekehrten Vorderseite des betreffenden Regalfaches hat.

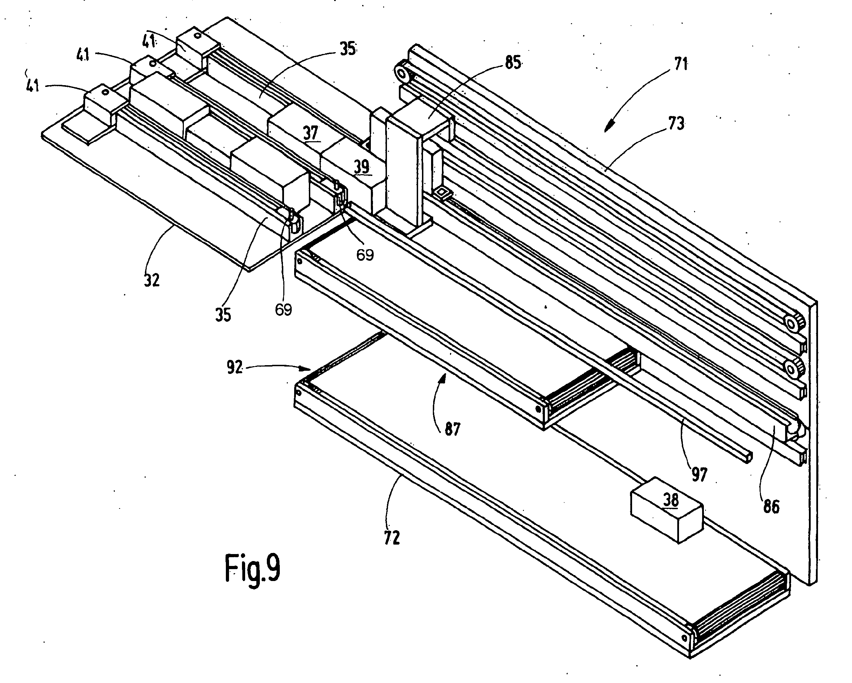

Nunmehr wird auch wie Fig. 9 zeigt die Endlosfördereinrichtung 87 in Gang gesetzt, mit einer Bewegungsrichtung, die den darauf befindlichen Gegenstand 39 in Richtung auf das Regalfach bewegt. Gleichzeitig wird auch der Schieber 85 bewegt. Dessen Aufgabe besteht darin, den Gegenstand 39 vollends in das Regalfach zurückzuschieben, wenn der Gegenstand 39 das Arbeitstrumm, die Endlosfördereinrichtung 87 verlassen hat. Ohne den Nachschieber 85 würde der Gegenstad aus dem Regalfach auskragen.

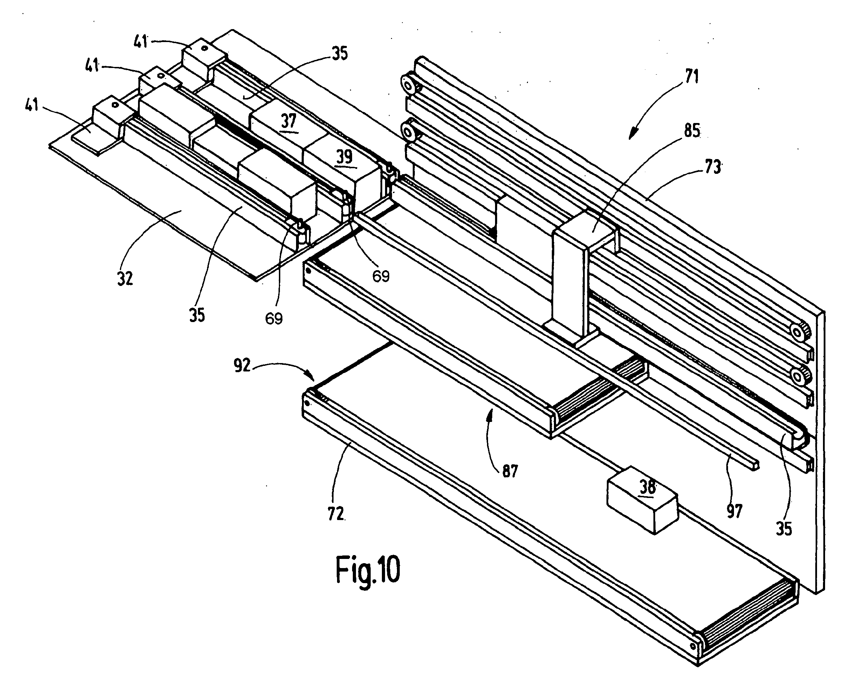

Der Nachschieber 85 fährt in die Mittellage zurück, wie dies Figur 10 erkenne lässt, wenn er den Gegenstand 39 vollständig in das Regalfach geschafft hat. Damit ist die Position nach Figur 10 erreicht. Die Gegenstände 37 und 39 liegen wieder im Regalfach, während der Gegenstand 38 der ursprünglich zwischen diesen Gegenständen 37 und 39 gelegen ist, auf der unteren Endlosfördereinrichtung 92 liegt.

Das Regalbediengerät 71 kuppelt von dem Mitnehmerschlitten 61 in der zuvor beschriebenen Weise aus und fährt sodann zu einer Kommissionierstation. Bei Erreichen der Kommissioniersstation wird die Endlosfördereinrichtung 92 in Gang gesetzt, um den Gegenstand 38 aus dem Regalbediengerät 71 auszugeben. Das Regalbediengerät 71 ist sodann frei, um den nächsten Gegenstand aufzunehmen.

Da die Schieber 41 letztendlich ständig in dem zugehörigen Regalfach bleiben, können auch zwischenliegende Gegenstände entnommen werden, wobei die davor liegenden Gegenstände während der Entnahme kurzfristig auf dem Regalbediengerät zwischengespeichert werden. Das gewünschte Produkt oder der gewünschte Gegenstand fallen durch eine entsprechende Öffnung in einem Sammelraum des Regalbediengerätes 71, wobei nach der Entnahme die zwischengespeicherten Gegensände über die nun wieder verschlossene Öffnung in das Regalfach zurückgebracht werden. Für das Zurückschaffen wird der in dem Regalfach befindliche Schieber nicht benötigt. Er wurde zuvor in seine Ruhestellung zurückbewegt.

Im Sinne einer möglichst schnellen Zugriffszeit sind die Beschleunigungswerte für den Schieber 41 verhältnismäßig hoch. Bei Gegenständen mit hochliegendem Schwerpunkt, besteht die Gefahr, dass die Gegenstände über den Fortsatz 54 umkippen. Um dies zu verhindern, kann in einer größeren Höhe oberhalb des zu erwartenden Schwerpunktes ein weiterer Fortsatz 110 verwendet werden, wie er in Figur 2 gestrichelt gezeigt ist.

Ein Regalbediengerät weist ebene Regalfachböden auf, die in einem Gestell befestigt sind. Für jedes Regalfach ist auf dem Regalfachboden eine Führungsschiene befestigt, in der ein Schieber geführt ist. Vor den Regalböden läuft ein Regalbediengerät, das jedes einzelne Regalfach ansteuern kann. In der lagerichtigen Position wird von dem Regalbediengerät aus der betreffende Schieber in Bewegung gesetzt, um die Produkte aus dem Regalfach auf das Regalbediengerät zu befördern. Bei dem gewünschten Produkt, öffnet sich auf dem Regalbediengerät eine große Öffnung, durch die hindurch das gewünschte Produkt in einen Zwischenspeicherbereich fällt. Anschließend wird die Öffnung verschlossen, und es werden die im übrigen temporär auf dem Regalbediengerät abgelegten Gegenstände in das betreffende Regalfach zurückgeschafft.

## Patentansprüche

1. Regallager (1)
mit wenigstens einem Regalfach, das einen ebenen Fachboden (32) aufweist und das dazu eingerichtet ist, einen oder mehrere voneinander getrennte Gegenstände (37,38,39) unmittelbar aufzunehmen, die längs eines linearen Beschickungswegs in das Regalfach hinein oder aus dem Regalfach heraus zu befördern sind und die in dem Regalfach längs des Beschickungswegs hintereinander liegen,
mit wenigsten einem dem Regalfach zugeordneten Schieber (41), der dazu eingerichtet ist, den Gegenstand (37,38,39) oder die Gegenstände aus dem Regalfach heraus zu befördern,
mit einer Führungsschiene (35), die bezüglich des Regalfachs ortsfest ist und mit der der Schieber (41) gekuppelt ist, um den Schieber (41) parallel zu dem Beschickungsweg zu führen,
mit einer in der Führungsschiene (35) translatorisch geführten Kuppelstange (53), die mit einem Mitnehmergleiter (51) zug- und druckfest verbunden ist, mit dem der Schieber (41) verbunden ist,
mit einem Regalbediengerät (71), das dazu eingerichtet ist vor jedes der Regalfächer bewegt zu werden und mit dem die Gegenstände in das Regalfach hinein sowie aus dem Regalfach heraus befördert werden, und
mit Antriebsmitteln (76) für den Schieber (41), die auf dem Regalbediengerät (71) angeordnet sind und die dazu eingerichtet sind, mittels der Kuppelstange (53) mit dem Schieber (41) wahlweise lösbar gekuppelt zu werden, um den Schieber (41) zumindest im Sinne eines Herausbeförderns von Gegenständen (37,38,39) aus dem Regalfach in Bewegung zu setzen.

2. Regallager nach Anspruch 1, **dadurch gekennzeichnet, dass** jeweils das Regallager eine Vielzahl von Regalfächern aufweist.

3. Regallager nach Anspruch 1, **dadurch gekennzeichnet, dass** der Fachboden (32) horizontal ausgerichtet ist.

4. Regallager nach Anspruch 1, **dadurch gekennzeichnet, dass** der Fachboden (32) derart ausgerichtet ist, dass die Beschickungsbewegung horizontal liegt.

5. Regallager nach Anspruch 1, **dadurch gekennzeichnet, dass** das Regallager eine Vielzahl von übereinander angeordneten Regalböden aufweist, und dass auf jedem Regalboden wenigstens ein Regalfach verwirktlicht ist.

6. Regallager nach Anspruch 1, **dadurch gekennzeichnet, dass** der Fachboden ein Bereich des jeweiligen Regalbodens (32) ist.

7. Regallager nach Anspruch 1, **dadurch gekennzeichnet, dass** der Schieber (41) wenigstens einen Betätigungsfortsatz (54) aufweist, der dazu eingerichtet ist, mit der benachbarten Seite eines Gegenstandes (37,38,39) in Eingriff zu kommen, und dass sich der Betätigungsfortsatz (54) in unmittelbarer Nähe des zugehörigen Fachbodens befindet.

8. Regallager nach Anspruch 7, **dadurch gekennzeichnet, dass** sich der Betätigungsfortsatz (54) in Richtung quer zu dem Beschickungsweg eine Länge aufweist, die größer ist als die halbe Breite des Regalfaches in horizontaler Richtung quer zu dem Beschickungsweg.

9. Regallager nach Anspruch 7, **dadurch gekennzeichnet, dass** der Schieber (41) wenigstens einen weiteren Betätigungsfortsatz (110) aufweist, der sich im Abstand zu dem ersten Betätigungsfortsatz (54) befindet.

10. Regallager nach Anspruch 1, **dadurch gekennzeichnet, dass** der Hub des Schiebers (41) der maximal ausnutzbaren Tiefe des Regalfaches entspricht.

11. Regallager nach Anspruch 1, **dadurch gekennzeichnet, dass** die Führungsschiene (35) lediglich neben einer Seite des Schiebers (41) angeordnet ist.

12. Regallager nach Anspruch 11, **dadurch gekennzeichnet, dass** die Führungsschiene (35) als Hohlrofil mit einer Führungsnut (46) ausgeführt ist.

13. Regallager nach Anspruch 12, **dadurch gekennzeichnet, dass** das Profil der Führungsnut (46) sich aus einem Kreis und einem Rechteck zusammensetzt, das in den Kreis einmündet, wobei das Rechteck dem Schlitz (47) der Führungsnut (46) entspricht.

14. Regallager nach Anspruch 1, **dadurch gekennzeichnet, dass** der Mitnehmergleiter (51) zumindest abschnittsweise die Gestalt einer Kugel aufweist, deren Durchmesser an den kreisförmigen Teil der Führungsnut (46) angepasst.

15. Regallager nach Anspruch 1, **dadurch gekennzeichnet, dass** der Mitnehmergleiter (51) einen Zapfen (52) aufweist, der in eine Öffnung des Schiebers (41) eingreift.

16. Regallager nach Anspruch 1, **dadurch gekennzeichnet, dass** der Schieber (41) eine seitliche Führungsfläche (57,58) aufweist, die mit der Führungseinrichtung (35) zusammenwirkt.

17. Regallager nach Anspruch 1, **dadurch gekennzeichnet, dass** die Führungsschiene (35) eine Führungsfläche (42,44) aufweist, die sich über die Länge des Hubs des Schiebers (41) durchgehend erstreckt, und dass die Länge der Führungsfläche (57, 58) an dem Schieber (41) eine solche Erstreckung hat, die ein Klemmen des Schiebers (41) an der Führungsschiene (35) ausschließt.

18. Regallager nach Anspruch 15, **dadurch gekennzeichnet, dass** die Kuppelstange (53) starr mit dem kugelförmigen Gleiter (51) verbunden ist.

19. Regallager nach Anspruch 1, **dadurch gekennzeichnet, dass** ein Kuppelschlitten (61) vorhanden ist, der gelenkig mit der Kuppelstange (53) verbunden ist.

20. Regallager nach den Ansprüchen 13 und 19, **dadurch gekennzeichnet, dass** der Kuppelschlitten (61) einen Abschnitt aufweist, der seitlich in dem Schlitz (47) der Führungsnut (46) geführt ist.

21. Regallager nach Anspruch 19, **dadurch gekennzeichnet, dass** der Kuppelschlitten (61) einen Kuppelzapfen (69) trägt, der aus der Führungsnut (46) herausragt.

22. Regallager nach Anspruch 1, **dadurch gekennzeichnet, dass** das Regalbedientgerät (71) in Führungsmitteln (3) geführt ist, die dazu eingerichtet sind, das Regalbediengerät (71) vor jedes Regalfach zu bringen.

23. Regallager nach Anspruch 23, **dadurch gekennzeichnet, dass** das Regalbediengerät (71) wenigstens eine Fördereinrichtung (87,85) aufweist, um den Gegenstand oder die Gegenstände (37,38,39) in ein Regalfach zu transportieren.

24. Regallager nach Anspruch 1, **dadurch gekennzeichnet, dass** die Fördereinrichtung ein Endlosförderband (87) umfasst.

25. Regallager nach Anspruch 24, **dadurch gekennzeichnet, dass** das Regalbediengerät (71) eine wahlweise verschließbare Öffnung aufweist, um Gegenstände, die mit Hilfe des Schiebers (41) auf das Regalbedientgerät (71) befördert werden, nach unten aus dem Beschickungsweg zu entnehmen.

26. Regallager nach Anspruch 25, **dadurch gekennzeichnet, dass** das Verschlussmittel der Öffnung von dem Förderband (87) gebildet ist.

27. Regallager nach Anspruch 24, **dadurch gekennzeichnet, dass** das Förderband (87) auf dem Regalbediengerät (71) in Richtung parallel zu dem Beschickungsweg hin und her bewegbar ist.

28. Regallager nach Anspruch 25, **dadurch gekennzeichnet, dass** das Regalbediengerät (71) unterhalb der Ausgabeöffnung eine weitere Fördereinrichtung (92) aufweist.

29. Regallager nach Anspruch 19, **dadurch gekennzeichnet, dass** die Antriebsmittel einen Antriebsschlitten (76) aufweisen, der derart gestaltet ist, dass er mit dem Kuppelschlitten (61) wahlweise kuppelbar ist.

30. Regallager nach Anspruch 29, **dadurch gekennzeichnet, dass** zum Kuppeln einer Öse (99) an dem freien Ende des Antriebsschlittens (76) vorgesehen ist.

31. Regallager nach Anspruch 1, **dadurch gekennzeichnet, dass** das Regalbediengerät eine verstellbare Führungswand (97) aufweist, die sich in Richtung parallel zu dem Beschickungsweg erstreckt und deren Führungsfläche vertikal ausgerichtet ist.

32. Regallager nach Anspruch 19, **dadurch gekennzeichnet, dass** die Antriebsmittel auf dem Regalbediengerät eine Führungsschiene (88) umfassen, die dazu eingerichtet ist, den Kuppelschlitten (61) zu führen.

33. Regallager nach den Ansprüchen 13 und 32, **dadurch gekennzeichnet, dass** die Führungsmittel (88) auf dem Regalbediengerät (71) Führungsschienen umfassen, deren Führungsnut den selben Querschnitt aufweist, wie die Führungsnut (46) der Führungsschiene (35) in dem Regalfach.

34. Regallager nach Anspruch 33, **dadurch gekennzeichnet, dass** sich der Schlitz (47) der Führungsnut (46) am Ende der Führungsschiene (35), das dem Regalbedientgerät zugekehrt ist, trichterförmig erweitert.

## Claims

1. Storage shelving unit (1)
with at least one shelf compartment, which has a plane compartment base (32) and which is fitted to directly receive one or more separate objects (37, 38, 39), which are to be conveyed into the shelf compartment and out of the shelf compartment along a linear loading path and which lie one behind the other in the shelf compartment along the loading path,
with at least one slider (41) associated with the shelf compartment, which is fitted to convey the object (37, 38, 39) or objects out of the shelf compartment, with a guide rail (35), which is stationary in relation to the shelf compartment and to which the slider (41) is coupled in order to guide the slider (41) parallel to the loading path,
with a coupling rod (53) guided by translatory movement in the guide rail (35) that is connected to an entrainment element (51) to be pull- and pressure-resistant, to which the slider (41) is connected,
with a storage and retrieval unit (71), which is fitted to be moved in front of each shelf compartment and with which the objects are conveyed into the shelf compartment and also out of the shelf compartment, and
with drive elements (76) for the slider (41), which are arranged on the storage and retrieval unit (71) and which are fitted to be selectively detachably coupled to the slider (41) by means of the coupling rod (53) in order to set the slider (41) in motion at least in the direction of conveying objects (37, 38, 39) out of the shelf compartment.

2. Storage shelving unit according to claim 1, **characterised in that** the storage shelving unit respectively has a plurality of shelf compartments.

3. Storage shelving unit according to claim 1, **characterised in that** the compartment base (32) is oriented horizontally.

4. Storage shelving unit according to claim 1, **characterised in that** the compartment base (32) is oriented such that the loading movement is horizontal.

5. Storage shelving unit according to claim 1, **characterised in that** the storage shelving unit has a plurality of shelf bottoms arranged one above the other, and that at least one shelf compartment is configured on each shelf bottom.

6. Storage shelving unit according to claim 1, **characterised in that** the compartment base is a region of the respective shelf bottom (32).

7. Storage shelving unit according to claim 1, **characterised in that** the slider (41) has at least one operating extension (54), which is fitted to come into engagement with the adjacent side of an object (37, 38, 39), and that the operating extension (54) is located in the direct vicinity of the associated compartment base.

8. Storage shelving unit according to claim 7, **characterised in that** in a direction transversely to the loading path the operating extension (54) has a length, which is greater than half the width of the shelf compartment in horizontal direction transversely to the loading path.

9. Storage shelving unit according to claim 7, **characterised in that** the slider (41) has at least one further operating extension (110), which is located at a distance from the first operating extension (54).

10. Storage shelving unit according to claim 1, **characterised in that** the stroke of the slider (41) corresponds to the maximum usable depth of the shelf compartment.

11. Storage shelving unit according to claim 1, **characterised in that** the guide rail (35) is only arranged next to a side of the slider (41).

12. Storage shelving unit according to claim 11, **characterised in that** the guide rail (35) is configured as a hollow profile with a guide groove (46).

13. Storage shelving unit according to claim 12, **characterised in that** the profile of the guide groove (46) is made up of a circle and a rectangle, which opens into the circle, wherein the rectangle corresponds to the slot (47) of the guide groove (46).

14. Storage shelving unit according to claim 1, **characterised in that** at least in sections the entrainment element (51) has the shape of a sphere, the diameter of which is adapted to the circular part of the guide groove (46).

15. Storage shelving unit according to claim 1, **characterised in that** the entrainment element (51) has a journal (52), which engages into an opening of the slider (41).

16. Storage shelving unit according to claim 1, **characterised in that** the slider (41) has a lateral guide face (57, 58), which interacts with the guide means (35).

17. Storage shelving unit according to claim 1, **characterised in that** the guide rail (35) has a guide face (42, 44), which extends continuously over the length of the stroke of the slider (41), and that the extent of the length of the guide face (57, 58) on the slider (41) is such that the slider (41) is prevented from jamming on the guide rail (35).

18. Storage shelving unit according to claim 15, **characterised in that** the coupling rod (53) is rigidly connected to the spherical entrainment element (51).

19. Storage shelving unit according to claim 1, **characterised in that** a coupling runner (61) is provided, which is pivoted to the coupling rod (53).

20. Storage shelving unit according to claims 13 and 19, **characterised in that** the coupling runner (61) has a section, which is guided laterally in the slot (47) of the guide groove (46).

21. Storage shelving unit according to claim 19, **characterised in that** the coupling runner (61) bears a coupling journal (69), which projects out of the guide groove (46).

22. Storage shelving unit according to claim 1, **characterised in that** the storage and retrieval unit (71) is guided in guide elements (3), which are fitted to move the storage and retrieval unit (71) in front of each shelf compartment.

23. Storage shelving unit according to claim 23?, **characterised in that** the storage and retrieval unit (71) has at least one conveying means (87, 85) to transport the object or objects (37, 38, 39) into a shelf compartment.

24. Storage shelving unit according to claim 1, **characterised in that** the conveying means comprises a continuous conveyor belt (87).

25. Storage shelving unit according to claim 24, **characterised in that** the storage and retrieval unit (71) has a selectively closable opening to remove objects, which are being conveyed onto the storage and retrieval unit (71) by means of the slider (41), downwards out of the loading path.

26. Storage shelving unit according to claim 25, **characterised in that** the closing means of the opening is formed by the conveyor belt (87).

27. Storage shelving unit according to claim 24, **characterised in that** the conveyor belt (87) is movable back and forth on the storage and retrieval unit (71) in a direction parallel to the loading path.

28. Storage shelving unit according to claim 25, **characterised in that** the storage and retrieval unit (71) has a further conveying means (92) underneath the delivery opening.

29. Storage shelving unit according to claim 19, **characterised in that** the drive elements have a drive runner (76), which is configured such that it can be selectively coupled to the coupling runner (61).

30. Storage shelving unit according to claim 29, **characterised in that** an eyelet (99) is provided on the free end of the drive runner (76) for coupling.

31. Storage shelving unit according to claim 1, **characterised in that** the storage and retrieval unit has an adjustable guide wall (97), which extends in a direction parallel to the loading path and its guide face is oriented vertically.

32. Storage shelving unit according to claim 19, **characterised in that** the drive elements comprise a guide rail (88) on the storage and retrieval unit, which is fitted to guide the coupling runner (61).

33. Storage shelving unit according to claims 13 and 32, **characterised in that** the guide elements (88) on the storage and retrieval unit (71) comprise guide rails, the guide groove of which has the same cross-section as the guide groove (46) of the guide rail (35) in the shelf compartment.

34. Storage shelving unit according to claim 33, **characterised in that** the slot (47) of the guide groove (46) widens in a funnel shape at the end of the guide rail (35) facing the storage and retrieval unit.

## Revendications

1. Magasin à rayonnage (1)
avec au moins un compartiment de rayonnage qui comporte un plancher de compartiment (32) plan et est agencé pour recevoir directement un ou plusieurs objets (37, 38, 39) séparés qui sont chargés dans et déchargés du compartiment de rayonnage suivant un trajet de chargement linéaire et sont disposés les uns derrière les autres dans le compartiment, le long du trajet de chargement,
avec au moins un poussoir (41) qui est associé au compartiment de rayonnage et est agencé pour transporter l'objet ou les objets hors du compartiment de rayonnage,
avec un rail de guidage (35) qui est fixe par rapport au compartiment de rayonnage et est couplé au poussoir (41) aux fins de guider ledit poussoir (41) parallèlement au trajet de chargement,
avec une tige de couplage (53) qui est guidée en translation dans le rail de guidage et est liée de manière rigide en traction et en compression à un coulisseau d'entraînement (51) auquel le poussoir (41) est relié,
avec un appareil de desserte de rayonnage (71) qui est agencé pour être amené devant chacun des compartiments de rayonnage et à l'aide duquel les objets peuvent être chargés dans et déchargés du compartiment de rayonnage, et
avec des moyens d'entraînement (76) du poussoir (41) qui sont disposés sur l'appareil de desserte de rayonnage (71) et sont agencés pour être couplés de manière sélective et séparable au poussoir (41) par l'intermédiaire de la tige de couplage (53), aux fins de déplacer le poussoir (41) hors du compartiment de rayonnage dans le sens d'un déchargement d'objets (37, 38, 39).

2. Magasin à rayonnage selon la revendication 1, **caractérisé par le fait que** le magasin à rayonnage comporte chaque fois une pluralité de compartiments de rayonnage.

3. Magasin à rayonnage selon la revendication 1, **caractérisé par le fait que** le plancher de compartiment (32) est horizontal.

4. Magasin à rayonnage selon la revendication 1, **caractérisé par le fait que** le plancher de compartiment (32) est agencé de telle sorte que le déplacement de chargement soit horizontal.

5. Magasin à rayonnage selon la revendication 1, **caractérisé par le fait que** le magasin à rayonnage comporte une pluralité de planchers de rayonnage disposés l'un au-dessus de l'autre et qu'au moins un compartiment de rayonnage est formé sur chaque plancher de rayonnage.

6. Magasin à rayonnage selon la revendication 1, **caractérisé par le fait que** le plancher de compartiment de rayonnage est situé dans la région du plancher de rayonnage (32) concerné.

7. Magasin à rayonnage selon la revendication 1, **caractérisé par le fait que** le poussoir (41) présente au moins une saillie de commande (54) qui est agencée pour venir en prise avec le côté voisin d'un objet (37, 38, 39) et **par le fait que** la saillie de commande (54) est située dans le voisinage immédiat du fond de compartiment concerné.

8. Magasin à rayonnage selon la revendication 7, **caractérisé par le fait que** la saillie de commande (54) présente dans la direction transversale au trajet de chargement, une longueur qui est supérieure à la demi-largeur du compartiment de rayonnage dans la direction horizontale, transversalement au trajet de chargement.

9. Magasin à rayonnage selon la revendication 7, **caractérisé par le fait que** le poussoir (41) comporte au moins une saillie de commande (110) supplémentaire qui est située à distance de la première saillie de commande (54).

10. Magasin à rayonnage selon la revendication 1, **caractérisé par le fait que** la course du poussoir (41) correspond à la profondeur exploitable maximale du compartiment de rayonnage.

11. Magasin à rayonnage selon la revendication 1, **caractérisé par le fait que** le rail de guidage (35) est disposé uniquement à proximité d'un côté du poussoir (41).

12. Magasin à rayonnage selon la revendication 11, **caractérisé par le fait que** le rail de guidage (35) est conformé en profilé creux avec une rainure de guidage (46).

13. Magasin à rayonnage selon la revendication 1, **caractérisé par le fait que** le profil de rainure de guidage (46) se compose d'un cercle et d'un rectangle qui débouche dans le cercle, le rectangle correspondant à la fente (47) de la rainure de guidage (46).

14. Magasin à rayonnage selon la revendication 1, **caractérisé par le fait que** le coulisseau d'entraînement (51) présente au moins localement la forme d'une sphère dont le diamètre est adapté à la portion circulaire de la rainure de guidage (46).

15. Magasin à rayonnage selon la revendication 1, **caractérisé par le fait que** le coulisseau d'entraînement (51) comporte un téton (52) qui pénètre dans une ouverture du poussoir (41).

16. Magasin à rayonnage selon la revendication 1, **caractérisé par le fait que** le poussoir (41) présente une surface guidage (57, 58) latérale qui coopère avec le dispositif de guidage (35).

17. Magasin à rayonnage selon la revendication 1, **caractérisé par le fait que** le rail de guidage (35) présente une surface de guidage (42, 44) qui s'étend sur la totalité de la longueur de la course du poussoir (41) et que la longueur de la surface de guidage (57, 58) sur le poussoir (41) est telle qu'elle exclut tout coincement du poussoir (41) sur le rail de guidage (35).

18. Magasin à rayonnage selon la revendication 15, **caractérisé par le fait que** la tige de couplage (53) est liée rigidement au coulisseau (51) sphérique.

19. Magasin à rayonnage selon la revendication 1, **caractérisé par le fait qu'**il est prévu un chariot de couplage (61) qui est lié de manière articulée à la tige de couplage (53).

20. Magasin à rayonnage selon les revendications 13 et 19, **caractérisé par le fait que** le chariot couplage (61) comporte une portion qui est guidée latéralement dans la fente (47) de la rainure de guidage (46).

21. Magasin à rayonnage selon la revendication 19, **caractérisé par le fait que** le chariot de couplage (61) porte un téton de couplage (69) qui fait saillie hors de la rainure de guidage (46).

22. Magasin à rayonnage selon la revendication 1, **caractérisé par le fait que** l'appareil de desserte de rayonnage (71) est guidé dans des moyens de guidage (3) qui sont agencés de manière à amener l'appareil de desserte de rayonnage (71) devant chaque compartiment de rayonnage.

23. Magasin à rayonnage selon la revendication 22, **caractérisé par le fait que** l'appareil de desserte de rayonnage (71) présente au moins un dispositif de transport (87, 85) pour transporter l'objet ou les objets (37, 38, 39) dans un compartiment de rayonnage.

24. Magasin à rayonnage selon la revendication 1, **caractérisé par le fait que** le dispositif de transport est une bande transporteuse sans fin (87).

25. Magasin à rayonnage selon la revendication 24, **caractérisé par le fait que** l'appareil de desserte de rayonnage (71) présente une ouverture qui peut être fermée de manière sélective afin de prélever par le bas sur le trajet de chargement des objets qui sont amenés sur l'appareil de desserte de rayonnage (71) à l'aide du poussoir (41).

26. Magasin à rayonnage selon la revendication 25, **caractérisé par le fait que** le moyen de fermeture de l'ouverture est formé par la bande transporteuse (87).

27. Magasin à rayonnage selon la revendication 24, **caractérisé par le fait que** la bande transporteuse (87) sur l'appareil de desserte de rayonnage (71) peut être déplacée parallèlement au trajet de chargement avec un mouvement de va-et-vient.

28. Magasin à rayonnage selon la revendication 25, **caractérisé par le fait que** l'appareil de desserte de rayonnage (71) présente sous l'ouverture de transfert un dispositif de transport (92) supplémentaire.

29. Magasin à rayonnage selon la revendication 19, **caractérisé par le fait que** les moyens d'entraînement comportent un chariot d'entraînement (76) qui est agencé de manière à pouvoir être couplé de manière sélective au chariot de couplage (61).

30. Magasin à rayonnage selon la revendication 29, **caractérisé par le fait qu'**il est prévu pour le couplage un anneau (99) à l'extrémité libre du chariot d'entraînement (76).

31. Magasin à rayonnage selon la revendication 1, **caractérisé par le fait que** l'appareil de desserte de rayonnage présente une paroi de guidage (97) réglable qui s'étend parallèlement au trajet de chargement et dont la surface de guidage s'étend verticalement.

32. Magasin à rayonnage selon la revendication 19, **caractérisé par le fait que** les moyens d'entraînement sur l'appareil de desserte de rayonnage comprennent un rail de guidage (88) qui est agencé de manière à guider le chariot de couplage (61).

33. Magasin à rayonnage selon les revendications 13 et 32, **caractérisé par le fait que** les moyens de guidage (88) sur l'appareil de desserte de rayonnage (71) comprennent des rails de guidage dont la rainure de guidage présente la même section que la rainure de guidage (46) du rail de guidage (35) dans le compartiment de rayonnage.

34. Magasin à rayonnage selon la revendication 33, **caractérisé par le fait que** la fente (47) de la rainure de guidage (46) à l'extrémité du rail de guidage (35) tournée vers l'appareil de desserte de rayonnage s'élargit en entonnoir.
